# EUROPEAN PATENT SPECIFICATION

(11) **EP 1 049 235 B1**
(45) Date of publication and mention of the grant of the patent: **03.01.2007**
(21) Application number: 00108839.2
(22) Date of filing: 26.04.2000
(51) Int. Cl.: H02K 11/04, H02K 9/19, H02K 7/116, H02K 16/02

(54) **Drive unit**
Antriebseinheit
Unité d'entraînement

(30) Priority: 27.04.1999 JP 12028699; 15.12.1999 JP 35673499; 24.03.2000 JP 2000088590
(43) Date of publication of application: 02.11.2000
(73) Proprietor: AISIN AW CO., LTD., Anjo-shi, Aichi-ken 444-1192 (JP)
(72) Inventor: Hara, Takeshi, c/o AISIN AW Co., Ltd., Anjo-shi, Aichi-ken, 444-1192 (JP); Hotta, Yutaka, c/o AISIN AW Co., Ltd., Anjo-shi, Aichi-ken, 444-1192 (JP); Takenaka, Masayuki, c/o AISIN AW Co., Ltd., Anjo-shi, Aichi-ken, 444-1192 (JP); Agata, Hiromichi, c/o AISIN AW Co., Ltd., Anjo-shi, Aichi-ken, 444-1192 (JP); Yamaguchi, Kozo, c/o AISIN AW Co., Ltd., Anjo-shi, Aichi-ken, 444-1192 (JP); Kido, Takahiro, c/o AISIN AW Co., Ltd., Anjo-shi, Aichi-ken, 444-1192 (JP); Kutsuna, Naruhiko, c/o AISIN AW Co., Ltd., Anjo-shi, Aichi-ken, 444-1192 (JP)
(74) Representative: TBK-Patent

(56) References cited:
- GB-A- 2 289 581
- US-A- 5 585 681

## Description

### BACKGROUND OF THE INVENTION

### TECHNICAL FIELD OF THE INVENTION

The present invention relates to a drive unit in which an electric motor is used as a power source, and more particularly, to a cooling technology in a drive unit for an electric vehicle or a hybrid drive unit.

### RELATED ART

When an electric motor is used as a drive source for a vehicle, the load exerted to the electric motor varies significantly according to the running conditions. Accordingly, in order to manage the heat generated with a heavy load, cooling is necessary. Also, an electric motor requires a controller for its control (an inverter in case of an alternating current electric motor). Since a controller such as an inverter is connected to an electric motor with a power cable, it can be separated from the electric motor and set in an appropriate position. However, for mounting convenience in a vehicle, arrangements can also be used in which it is integrated with the electric motor.

In this way, when the controller is integrated with the electric motor, not only does the temperature of the controller rise due to the heat generated by its own elements, but it is also effected by the heat from the electric motor through a drive unit case and therefore requires cooling. Therefore, conventionally, there is an electric motor having an integrated inverter wherein a heat sink for mounting the inverter is attached to a drive unit case, and a cooling water channel is formed between the heat sink and the drive unit case so as to simultaneously cool the motor and the inverter (see Japanese Patent Application Laid-Open No. 7-288949).

However, according to the conventional art construction as described above, because the same cooling water simultaneously cools the inverter and the electric motor, there is a problem of the heat from the electric motor being transferred to the inverter by the cooling water and the case. Furthermore, a drive unit having the features of the preamble of claim 1 is shown in US 5 585 681.

### SUMMARY OF THE INVENTION

Accordingly, it is the object of the present invention to prevent the heat of the electric motor from transferring to the inverter in a drive unit in which the electric motor and the inverter are cooled with a common coolant.

According to the invention, the above object is solved with a drive unit having the features of claim 1.

In the foregoing construction, it is effective to adopt a construction wherein the space between first chamber and the second chamber is separated by an independent isolating means disposed on the partition wall side.

In the foregoing construction, it is effective to adopt a construction wherein the first chamber and the second chamber are communicated together by a communication passage, and are communicated in serial with the flow passage for coolant, with the first chamber side disposed upstream.

Alternatively, in the foregoing construction, the construction may be such that the first chamber and the second chamber are communicated in parallel together with the flow passage for coolant.

Furthermore, it is effective to adopt a construction wherein the isolating means is formed of a material having low heat conductivity.

Furthermore, in the foregoing construction, a construction may be adopted wherein the first chamber and the second chamber are separated by the isolating means disposed nearer to the inverter than the abutting face of the partition wall and the drive unit case.

In the construction described above, because the flow passage for coolant between the electric motor and the inverter is formed in two layers, on the motor side and on the inverter side, the coolant which flows therein acts as two heat insulating layers and it is possible to block the heat on the motor side, which becomes hotter than the inverter side, by having it be absorbed in two steps by the coolant halfway in the flow passage. Accordingly, it is possible to make it difficult for the heat from the motor to be transferred to the inverter, and thus prevent the temperature of the inverter from rising due to the integration of the motor and the inverter.

Further, because the isolating means is disposed on the partition wall side, heat transfer resistance is generated when the heat from the electric motor is transferred to the isolating means, and it is possible to make it difficult for the heat from the electric motor to be transferred to the coolant which flows in the first chamber on the inverter side.

Next, it is possible to prevent the heat of the electric motor from transferring to the inverter through the coolant because the coolant flows so as to cool the electric motor after cooling the inverter.

Next, it is possible to prevent the heat of the electric motor from transferring to the inverter through the coolant because the coolant flows independently to the first chamber and the second chamber, respectively.

Further, because the heat transfer from the second chamber to the first chamber is blocked by heat transfer resistance by the isolating means, it is possible to further improve cooling performance.

Furthermore, since it is possible to construct the flow passage for coolant mainly on the partition wall side, the structure of the drive unit case can be simplified so that the inverter and the motor can be cooled with a simple structure. Moreover, since the isolating means is on the partition wall, heat transfer resistance is generated when the heat from the motor is transferred to the isolating means so that it is possible to make it difficult for the heat from the motor to be transferred to the coolant which flows through the first chamber on the inverter side.

Further because the isolating means is on the inverter side with respect to the abutting portion of the drive unit case and the partition wall, the structure is such that that the partition wall extends to the drive unit case side from the isolating means so that the thermal capacity of the partition wall is increased by that amount and it is possible to suppress a rise in temperature on the inverter side.

### BRIEF DESCRIPTION OF THE DRAWINGS

Fig. 1 is a system construction diagram of an explanatory example not belonging to the invention of a hybrid drive unit.
Fig. 2 is a side view showing the axial position relationship of the drive unit of the explanatory example not belonging to the invention.
Fig. 3 is a circuit diagram showing a hydraulic system of the drive unit of the explanatory example not belonging to the invention.
Fig. 4 is a perspective view showing the appearance of the drive unit with an integrated inverter of the explanatory example not belonging to the invention.
Fig. 5 is a schematic diagram showing conceptually a cooling system of the explanatory example not belonging to the invention.
Fig. 6 is an exploded view showing the detailed construction of the explanatory example not belonging to the invention as viewed from above.
Fig. 7 is an exploded view showing a part of the construction members illustrated in Fig. 6 as viewed from below.
Fig. 8 is a sectional view showing the detailed construction of the explanatory example not belonging to the invention.
Fig. 9 is a sectional view taken along line I-I of Fig. 8.
Fig. 10 is a schematic diagram showing conceptually a cooling system of a first embodiment of the present invention.
Fig. 11 is a schematic diagram showing conceptually a cooling system of a second embodiment of the present invention.
Fig. 12 is a cross-sectional view shoving an explanatory example not belonging to the invention.
Fig. 13 is a cross-sectional view showing an explanatory example not belonging to the invention.
Fig. 14 is a schematic diagram showing conceptually a cooling system of a third embodiment of the present invention.
Fig. 15 is a cross-sectional view showing a flow passage construction of the third embodiment.
Fig. 16 is a schematic diagram showing conceptually a cooling system of fourth embodiment of the present invention.
Fig. 17 is a schematic diagram showing conceptually a cooling system of an fifth embodiment of the present invention.

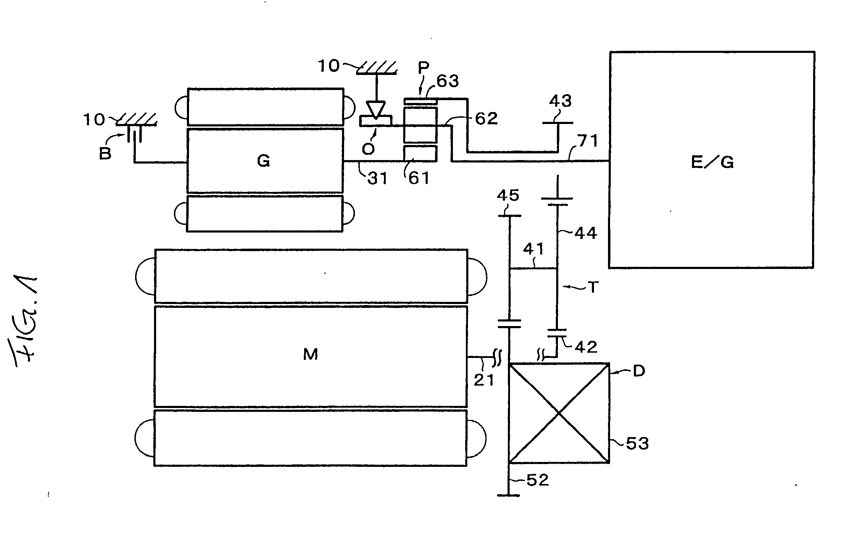

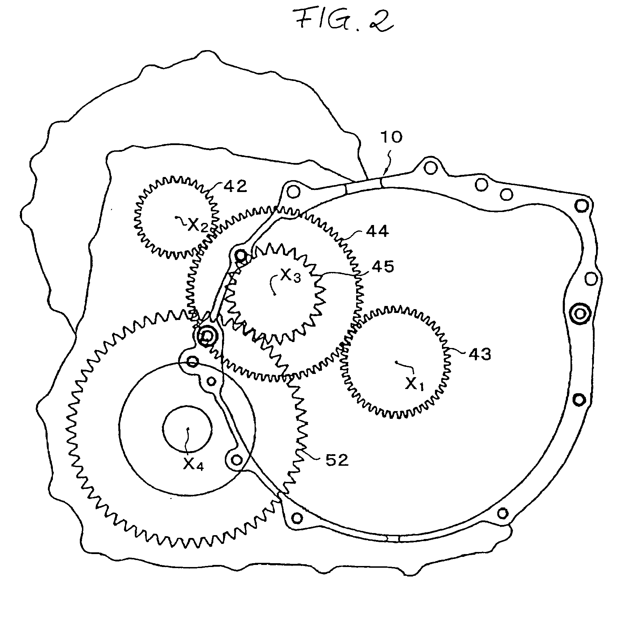

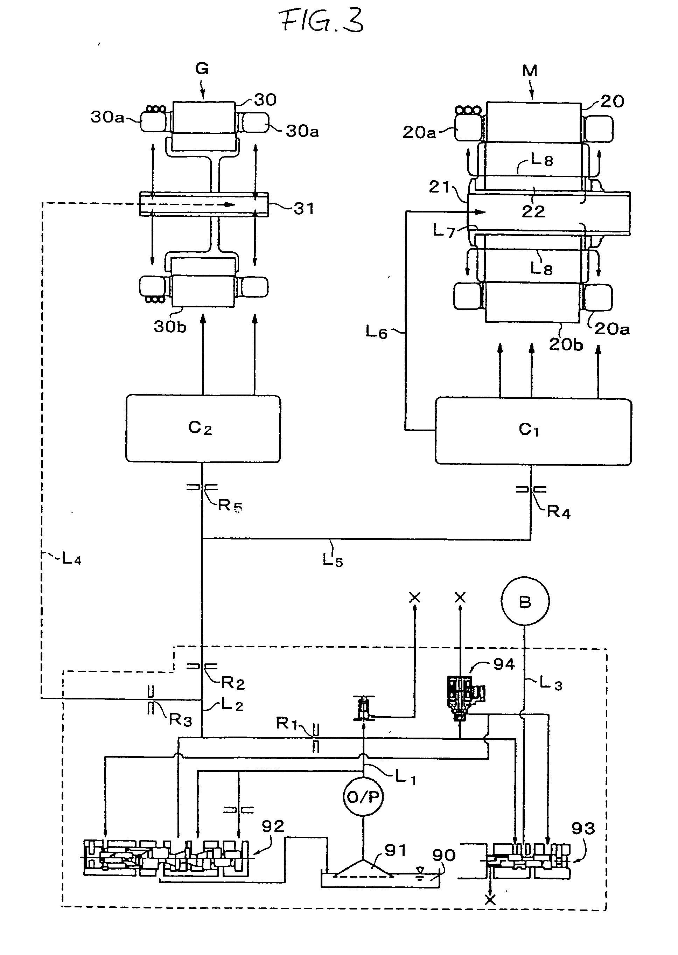

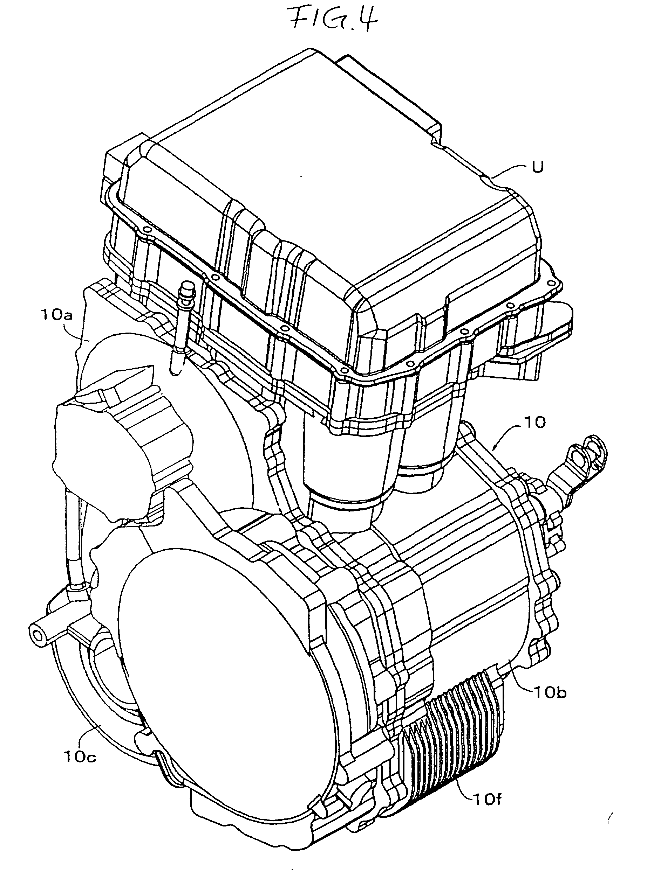

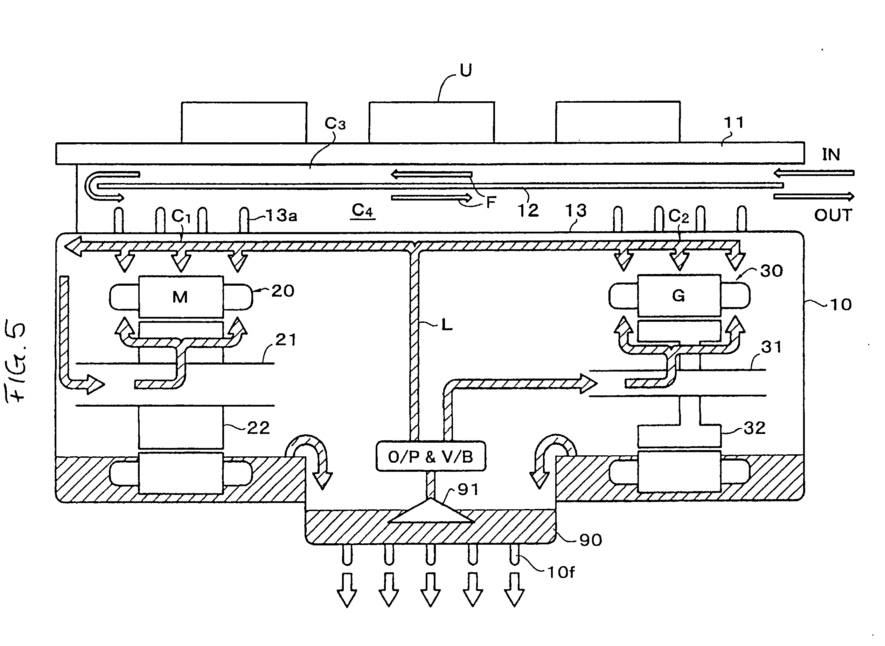

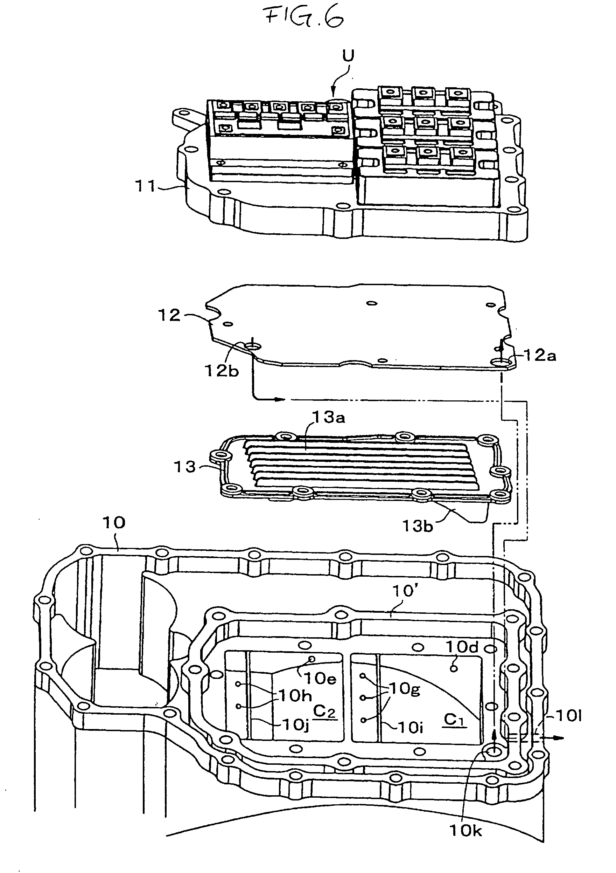

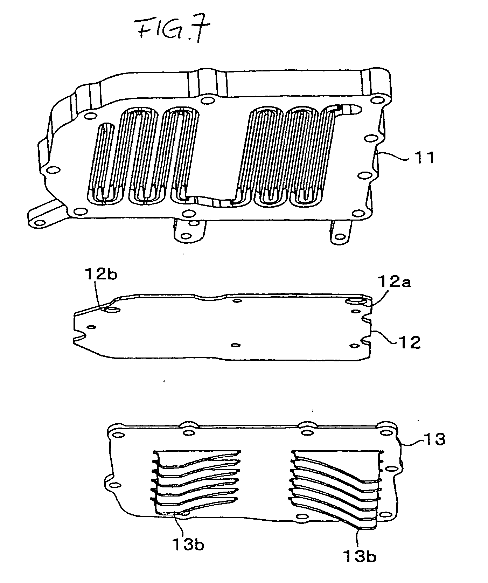

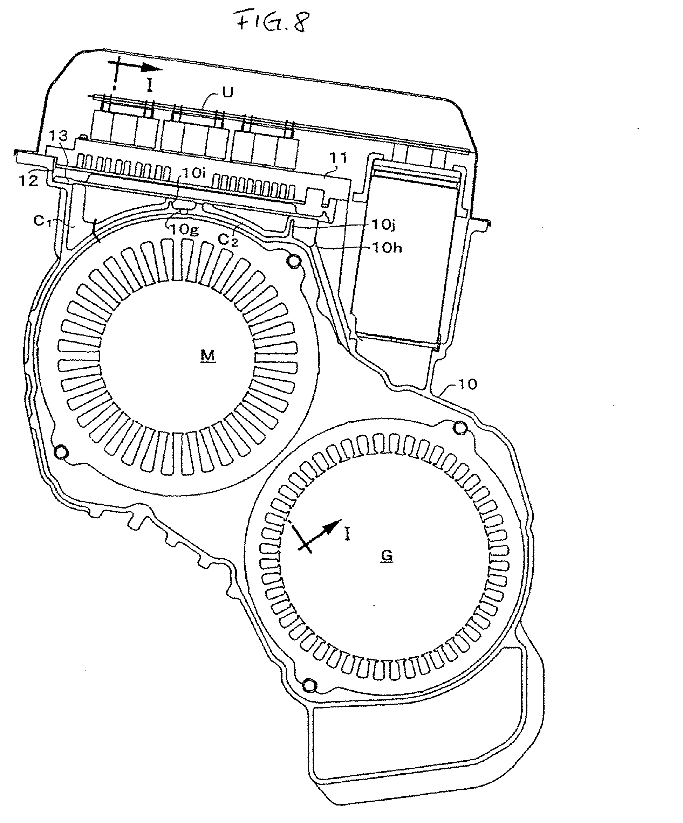

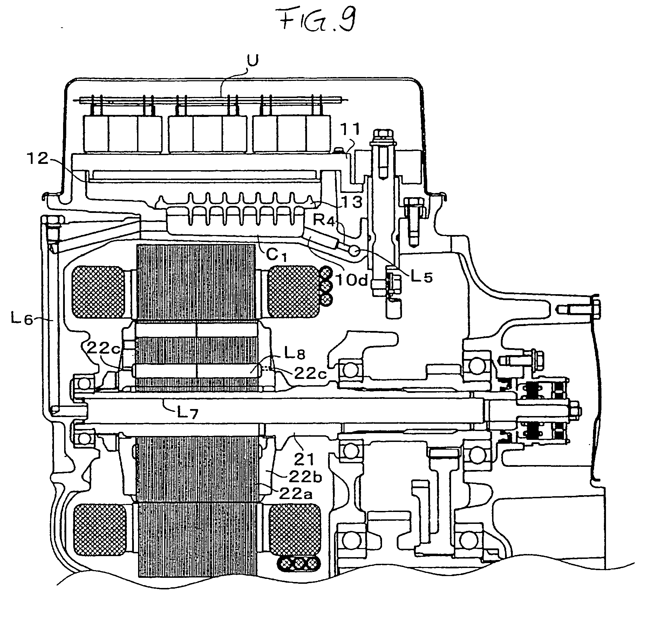

Embodiments of the present invention and explanatory examples will hereinafter be described with reference to the drawings. First, Fig. 1 shows a system construction of a hybrid drive unit. This unit has, as the principal construction elements, an internal combustion engine (hereinafter referred to as engine) E/G, an electric motor (hereinafter referred to as motor) M, an electric generator (hereinafter referred to as generator) G, and a differential D, with a planetary gear set P of a single pinion construction and a counter gear mechanism T being interposed between them. Furthermore, a one-way clutch O and a brake B are also provided.

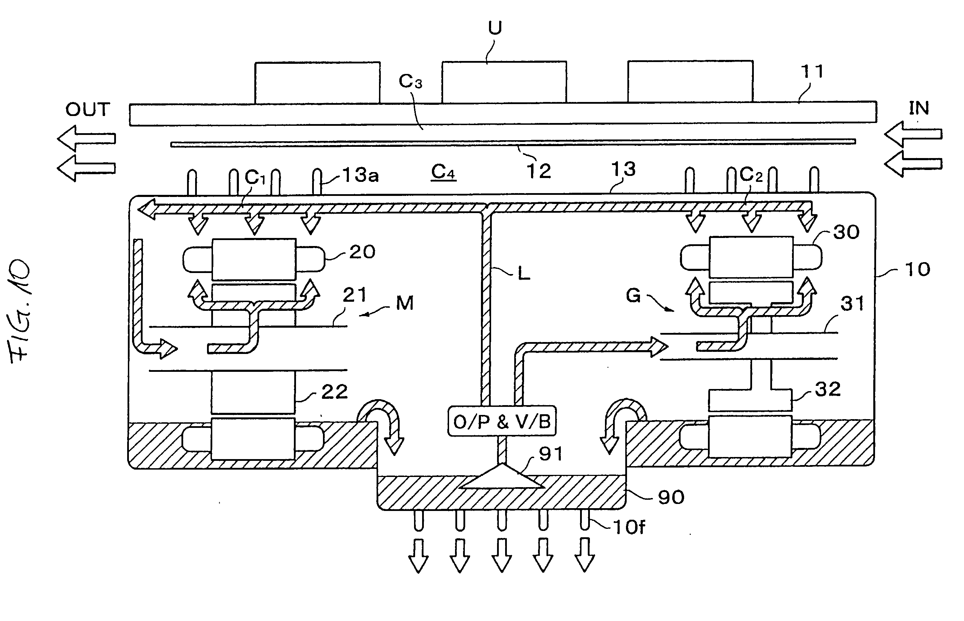

As illustrated by the actual positional relationship of the axes in Fig. 2, the drive unit is of a four-axial construction in which the engine E/G and the generator G are located on a first axis X₁, the motor M is located on a second axis X₂, the counter gear mechanism T is located on a third axis X₃, and the differential D is located on a fourth axis X₄, respectively. And, the engine E/G and the generator G are connected with the differential D through the planetary gear set P and the counter gear mechanism T. The motor M is connected with the differential D through the counter gear mechanism T.

The motor M is connected with the counter gear mechanism T by meshing a counter drive gear 42 fixed to a rotor shaft 21 of the motor M with a counter driven gear 44. The engine E/G is connected with the generator G and the counter gear mechanism T by connecting its output shaft 71 with a carrier 62 of the planetary gear set P. The generator G is connected to the engine E/G and the counter gear mechanism T by connecting its rotor shaft 31 with a sun gear 61 of the planetary gear set P. A ring gear 63 of the planetary gear set P is connected with a counter drive gear 43 on the first axis X₁ meshing with the counter driven gear 44 of the counter gear mechanism T. The counter gear mechanism T is of a construction having a counter driven gear 44 fixed to a counter shaft 41, and a differential drive pinion gear 45. The differential drive pinion gear 45 meshes with a differential ring gear 52 fixed to a differential case 53 of the differential D. The differential D is connected with the wheels (not shown) as is common knowledge.

The one-way clutch O is arranged with its inner race connected to the carrier 62 and the outer race connected to the drive unit case 10 so as to prevent reverse rotation of the carrier 62 by reactive force with a drive unit case 10. Also, the brake B is provided so as to secure the rotor shaft 31 of the generator G with the drive unit case 10 when necessary to prevent drive loss due to it rotating by the reaction torque when electric generation is unnecessary. The brake B is arranged so that a brake hub is connected with the rotor shaft 31, and a friction engaging member engages with the brake hub and the drive unit case 10.

In the drive unit of this type of construction, though there is a speed reduction relationship by a gear ratio portion by the counter gear mechanism T between the motor M and the wheels, they are directly connected in terms of motive force transmission. In contrast, the engine E/G and the generator G are connected together indirectly in terms of motive force transmission through the planetary gear set P counter gear mechanism T. As a result, by adjusting the generation load of the generator G with respect to the ring gear 63 which sustains the vehicle running load through the differential D and the counter gear mechanism T, running with an appropriately adjusted ratio utilizing the engine output for the driving force and the generation energy (battery charging) becomes possible. Also, because the reactive force applied to the carrier 62 is reversed by driving the generator G as a motor, the force functions as a reactive force element for retaining the carrier 62 with the drive unit case 10 through the one-way clutch O at that time so that the output of the generator G can be transmitted to the ring gear 63, thereby making it possible to strengthen the driving force at vehicle take-off by simultaneous output of the motor M and the generator G (running in parallel mode).

Next, Fig. 3 shows a hydraulic circuit construction of the hybrid drive unit. This circuit is provided with an oil sump 90 utilizing the bottom of the drive unit case 10, an electric oil pump O/P which sucks up oil through a strainer 91 from the oil sump 90 and which discharges it in the circuit, a regulator valve 92 which generates circuit line pressure, a brake valve 93 for controlling engagement/disengagement of the brake B, and a solenoid valve 94 for controlling switching of the brake valve 93, as the major elements. Thus, this circuit is constructed as a control circuit for feeding oil to the circulation passage supply oil passage L₂ as a coolant for cooling the motor M and the generator G and as a lubricant, and for controlling communication of a hydraulic servo supply oil passage L₃ of the brake B to the line pressure oil passage L₁ and drain communication.

The line pressure oil passage L₁ on the discharge side of the oil pump O/P is branched, with one branch connected to the supply oil passage L₂ of the circulation passage through the regulator valve 92, and the other branch connected to the supply oil passage L₃ of the hydraulic servo of the brake B through the brake valve 93. The line pressure oil passage L₁ and the supply oil passage L₂ are connected together through an orifice R₁. The supply oil passage L₂ of the circulation passage is branched, with the respective branches passing through orifices R₂, R₃. One branch is connected to the oil passage in rotor shaft 31 of the generator G through an oil passage L₄ in the case shown by the broken line, and the other branch is further branched at an oil passage L₅ in the case, and they are connected to an oil container C₁ for the motor M and an oil container C₂ for the generator G provided in the upper part of the drive unit case through orifices R₄, R₅, respectively.

With cooling of the motor M, oil led to an oil passage L₇ in the rotor shaft 21 from the coolant container C₁ through an oil passage L₆ in the case passes through an oil passage L₈ in the rotor 22, the detailed oil passage structure of which will be illustrated later with reference to the sectional structure, and is discharged by centrifugal force generated by the rotation of the rotor 22 toward a coil end 20a of the stator 20 from the end of the oil passage. In this way, by passing through the oil passage in the rotor 22, the rotor side is cooled. Further, cooling is done by the oil discharged from both ends of the rotor 22 being blown to the coil end 20a at both ends of the stator 20 and by the oil discharged direct from the coolant container C₁ being blown to a stator core 20b and the coil end 20a. In the same manner, cooling of the generator G is done by the oil discharged by centrifugal force from the oil passage in the rotor shaft 31 of the generator G through the radial directional oil hole being blown to the coil end 30a at both ends of the stator 30 and by the oil discharged from the coolant container C₂ being blown to the stator core 30b and coil end 30a. In this way, the oil which has thus cooled the motor M and the generator G and which has risen in temperature due to heat exchange drops into the bottom part of the drive unit case or runs down along the case wall so as to be recovered in the oil sump 90 disposed underneath the drive unit.

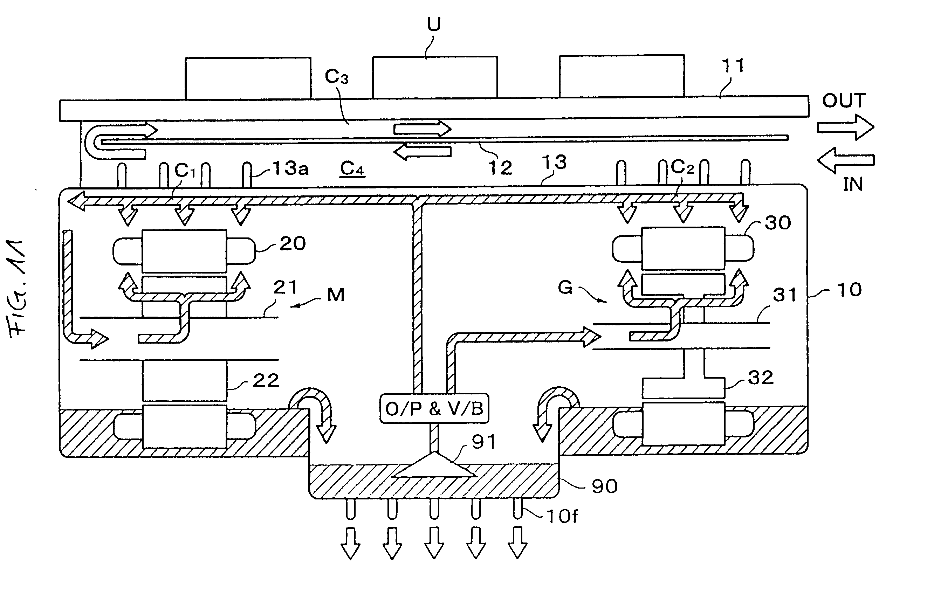

Fig. 4 shows the appearance of the drive unit from a perspective view. A construction is employed in which a large number of heat radiation fins 10f are formed integrally with the case 10 on the outer wall of the outside of the oil sump of the drive unit case 10 formed of aluminum material or the like, such that the oil recovered in the oil sump is air-cooled with airflow in the engine room. In Fig. 4, a reference numeral 10a denotes a motor accommodating portion in the drive unit case, 10b denotes a generator accommodating portion, and 10c denotes a differential accommodating portion. An inverter U (hereinafter referred to as inverter, a general term for an inverter for a motor and an inverter for a generator) for controlling the motor and the generator is, as observed in Fig. 4, mounted on the upper part of the drive unit case 10 and integrated with the drive unit case 10.

In the present specification, the term inverter means a power module comprising a switching transistor and accompanying circuit elements for converting the direct current of a battery power source into alternating current (three-phase alternating current when the motor is a three-phase A/C motor) and a circuit substrate upon which these elements are arranged.

Fig. 5 shows the cooling system of the drive unit schematically and conceptually including the upper and lower positional relationship. This cooling system is formed by a circulation passage L (shown by the wide arrows with hatching in the figure) utilizing oil as the first coolant and a flow passage F (shown by the thin white arrows in the figure) utilizing cooling water as the second coolant. The flow passage uses this cooling water as the coolant.

The oil as the first coolant is sucked up by the oil pump O/P from the oil sump 90 through the strainer 91, and cools the generator G and the motor M in the sequence as previously described, after which it is once stored in the bottom of the generator G accommodating portion and the bottom of the motor M accommodating portion of the drive unit case 10 so as to maintain a certain oil level that does not come into contact with the lowermost part of the rotors 22 and 32, and then the overflow portion is returned to the oil sump 90, thereby ending one cycle of circulation.

On the contrary, the cooling water as the second coolant forms a cooling system for cooling the oil as the first coolant utilizing the space between the partition wall 11, which is formed of an aluminum material or the like having good heat conductivity similar to the drive unit case 10 and which forms an attaching portion of the drive unit case 10 and the inverter U of an independent construction, and a heat transfer wall 13 in the oil circulation passage L within the drive unit case 10 as a flow passage F. In this explanatory example, a construction is adopted wherein a wall-shaped isolating means 12 is disposed between the partition wall 11 and the heat transfer wall 13, and the flow passage F for the cooling water cools the inverter U by heat exchange through the partition wall 11 while flowing between the partition wall 11 and the isolating means 12 and cools the oil by heat exchange with the oil through the heat transfer wall 13 while flowing between the isolating means 12 and the heat transfer wall 13.

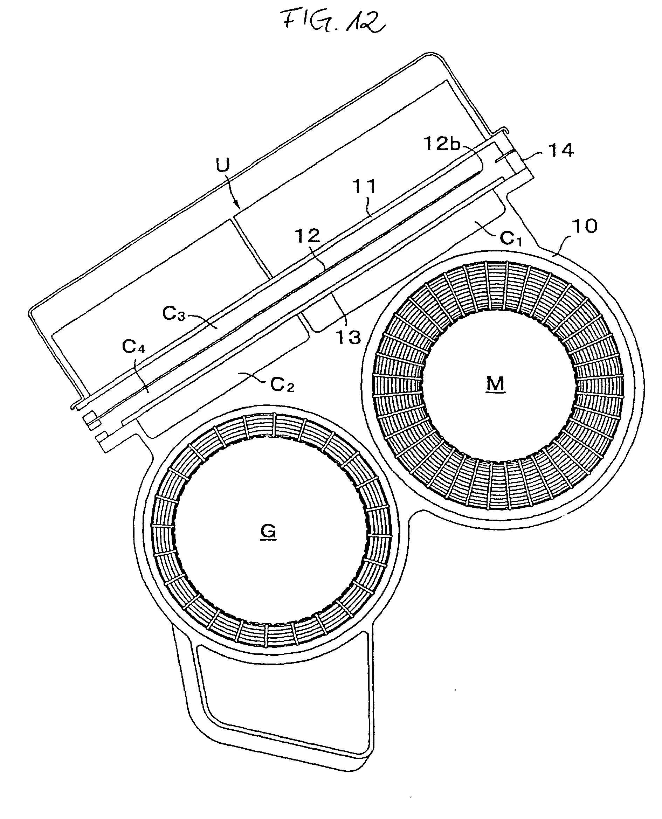

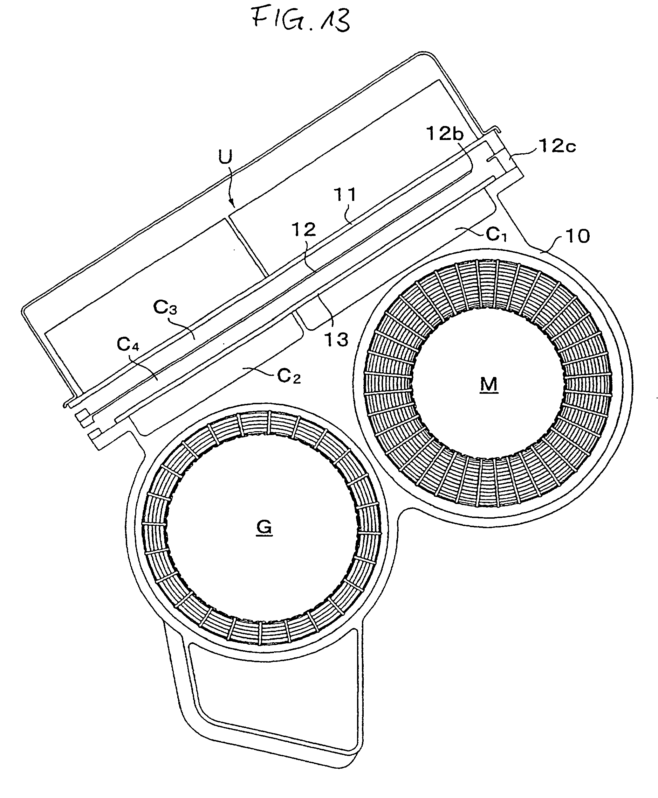

Fig. 6 is an exploded perspective view showing the connecting structure of the drive unit case 10 and the power module forming the inverter U in detail, and Fig. 7 shows the same structure from a different viewpoint. Fig. 8 and Fig. 9 show the same structure cut in different sections. In this explanatory example, the coolant containers C₁, C₂ are provided on the upper part of the motor accommodating portion in the drive unit case 10. The coolant container is divided into the coolant container C₁ for the motor and the coolant container C₂ for the generator. Halfway in the flow passage L₅ (see Fig. 3) for the first coolant leading to both of these coolant containers C₁, C₂, there are provided orifices R₄, R₅ having different apertures which distribute the feed distribution amounts of oil to both coolant containers C₁, C₂ according to the thermal loads of the motor M and the generator G, and those oil passages are open at inlets 10d, 10e on the sides of the coolant containers. Dams 10i, 10j are provided in positions near the outlet sides of both coolant containers. Further, downstream of the dams 10i, 10j of both coolant containers are formed oil outlets 10g, 10h which are open to the bottom faces of those coolant containers and which function as orifices for adjusting the discharge flow by the setting of the aperture.

As is illustrated by the subsequent course of passage of the first coolant in Fig. 9, the oil outlet 10g is connected to the intra-axial oil passage L₇ at the shaft end of the stator shaft 21 of the motor M, with the intra-case oil passage L₆ formed in the drive unit case utilized as the flow passage. The intra-axial oil passage L₇ is communicated with the peripheral groove formed in an end plate 22b supporting both ends of a core 22a of the motor M through the radial directional oil hole, passes through a plurality of intra-rotor oil passages L₈, of which both ends are communicated with the peripheral groove, and which are formed in the core 22a in the axial direction, and ends at a discharge hole 22c formed in the end plate 22b. In the drawing, both ends of one intra-rotor oil passage L₈ are shown leading to with the discharge hole 22c, but in detail, the construction is such that only one end of each intra-rotor oil passage L₈ is alternately led to the discharge hole 22c of the left and right end plates, thereby preventing an imbalance in the oil running in each rotor oil passage L₈. Also, the oil outlet 10h is led above the stator of the generator G through the intra-case oil passage, as shown in Fig. 8.

The heat transfer wall 13 which blocks the upper openings of the coolant containers C₁, C₂ is provided with a large number of cooling fins 13a, 13b on its upper face and lower face, and is constructed from an aluminum material or the like having good heat conductivity similar to the drive unit case 10. In this explanatory example, is an independent member from the drive unit 10 for the convenience of machining, and is fixed to the drive unit case 10 with bolts or the like. The oil cooling fins 13b on the lower face side of the heat transfer wall 13 change in height so as to follow the shape of the bottom part of the coolant containers C₁, C₂ as shown in Fig. 8. The arrangement is such that the fins are positioned on the entire area of the coolant container C₁ so as to improve heat transfer.

The partition wall 11 to which a power module forming the inverter U is fixed forms a cooling portion of the inverter U and is, in the embodiment, constructed so as to house a heat sink for improving the heat exchange efficiency, and as seen in Fig. 7, is provided with two narrow flow passages in parallel passing through the partition wall 11 turning back and forth. And, in order to run cooling water as the second coolant along this flow passage, an isolating means 12 is provided abutted with the lower face of the partition wall 11. In the present embodiment, the isolating means 12 is of an independent construction from the case and the partition wall because a material having a high insulating property is used for the isolating means 12. However, when the same material is used, it is possible to have an integrated construction with either one of the members. Accordingly, as shown in Fig. 5, the first chamber C₃ facing the partition wall 11 side and the second chamber C₄ facing the drive unit case 10 side are separated and defined by the isolating means 12 between the partition wall 11 and the drive unit case 10, and a flow passage is constructed in which both chambers C₃, C₄ are connected through the communication passage 12b.

In the unit of such a construction, the oil fed to the coolant containers C₁, C₂ from the respective inlets 10d, 10e is obstructed by the respective dams 10i, 10j and stored for a certain duration of time, after which it flows in contact with the oil cooling fins 13b on the lower face side of the heat transfer wall 13 to affect sufficient heat exchange. Then, the portions which ran over the dams 10i, 10j are adjusted according to the amount of oil necessary for the motor M and the generator G and discharged from the outlets 10g, 10h. Meanwhile, the cooling water passes through a hole 12a of the isolating means 12 from an inlet 10k open on the upper face of the drive unit case 10 into the heat sink of the partition wall 11, i.e., the first chamber C₄, and heat exchange is sufficiently conducted through the passage therein. Then, the cooling water is led between the heat transfer wall 13 and the isolating means 12 through the communication passage 12b forming a hole provided in the isolating means 12 in this explanatory example where it runs across the heat transfer wall 13 while coming into contact with the water cooling fins 13a on the upper face side of the heat transfer wall 13. The cooling water is then led outside the drive unit case 10 from a cooling water outlet 101 formed in the surrounding wall around the opening of the coolant container. The cooling water discharged from the drive unit case 10 is cooled by the radiator for cooling the engine or the cooler for exclusive use and then re-circulated.

Thus, according to the explanatory example described above, because the flow passage for coolant between the motor M and the inverter U is formed in two layers, on motor M side and on the inverter U side, the cooling water which flows therein acts as two heat insulating layers, and it becomes possible to block the heat on the motor M side which becomes hotter than the inverter U side by absorbing it in two steps with the cooling water halfway in the flow passage so that it is possible to make it difficult for the heat from the motor to be transferred to the inverter U. As a result, it is possible to prevent the temperature of the inverter U from rising due to the integration of the motor M and the inverter U. Furthermore, as the isolating means 12 is disposed on the partition wall 11 side, heat transfer resistance is generated when the heat from the motor M is transmitted to the isolating means 12, thereby making it difficult for the heat from the motor M to be transferred to the cooling water which flows through the first chamber C₃ on the inverter U side.

Furthermore, because the sequence is such that the cooling water first cools the power module forming the inverter U through the partition wall 11 and then cools the motor M and the generator G through the oil, the cooling water does not conduct heat exchange directly with the motor M and the generator G or simultaneously with the inverter U. Therefore, it is possible to prevent the cooling water temperature from rising above the heat resistant temperature of the inverter U. Accordingly, it is possible to cool the inverter U, motor M, and generator G efficiently and improve cooling performance. Also, as the flow passage of cooling water is formed in the space between the integrated inverter U and the drive unit case 10, a complicated construction such as that of conventional technology in which an exclusive cooling channel is provided around the drive unit case can be avoided, thus leading to an improvement in space efficiency and a reduction in cost. Furthermore, by separating the coolant container into a coolant container C₁ for the motor and a coolant container C₂ for the generator, it becomes possible to individually adjust the amount of oil to be supplied to the motor M and the generator G, respectively, from the coolant container. Accordingly, by adjusting the flow ratio with the orifices R₄, R₅ having different apertures and supplying the proper amount of oil to the motor M and the generator G, the respective objects can be effectively cooled according to their cooling temperature requirements. Furthermore, as the oil after heat exchange in the coolant containers C₁, C₂ is led to the rotor side of the motor M and the generator G and also used for cooling from the inner periphery side by utilizing the oil discharged from the rotor by centrifugal force, it also becomes possible to further cool the stators 20, 30, such that highly efficient motor cooling can be conducted by utilizing oil circulation to the utmost extent.

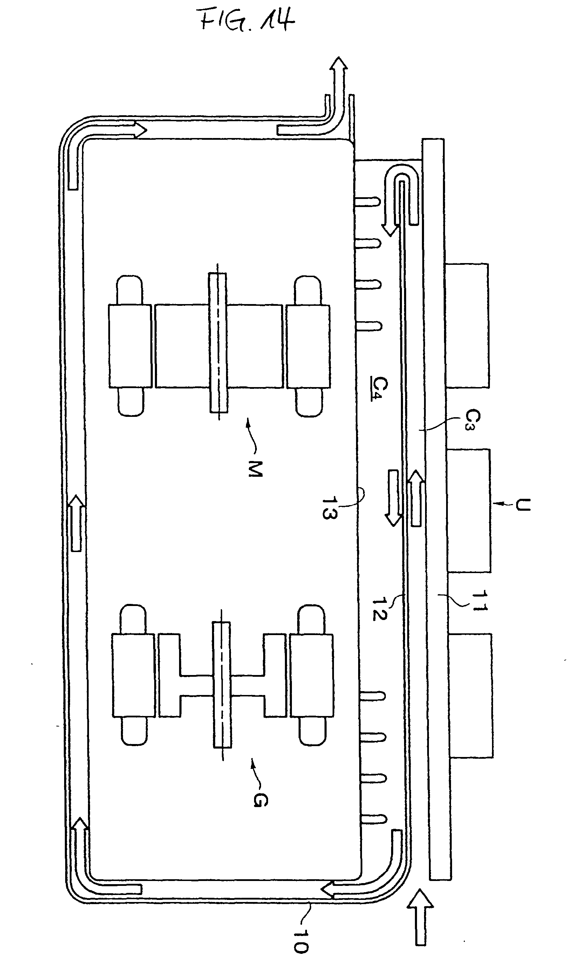

In this explanatory example, the flow of the cooling water as the second coolant is a flow with an upper and lower flow relationship turning back from the first chamber C₃ on the inverter U side to the second chamber C₄ side on the coolant container side, as illustrated most clearly in Fig. 5, such that this flow is a parallel flow. Fig. 10 shows this type of first embodiment with a schematic diagram similar to that of Fig. 5. In this embodiment, the first chamber C₃ facing the partition wall 11 side, which is divided into upper and lower areas by the isolating means 12, and the second chamber C₄ facing the circulating passage L side for the first coolant of the drive unit case 10, i.e., the heat transfer wall 13, are flow passages connected in parallel with the circulating passage for second coolant. Since the rest of construction is substantially same as in the explanatory example described above, all corresponding members are indicated with the same reference numerals and substituted instead of being described (in this respect, all of the subsequent embodiments are the same).

When this type of embodiment is adopted, because the cooling water flows respectively and independently in the first chamber C₃ and the second chamber C₄, the heat of the motor M is able to be prevented from being transferred to the inverter U through the cooling water. Moreover, since it is possible to run cooling water at a lower temperature to the second chamber C₄ side facing the heat transfer wall 13 of the coolant container, the cooling efficiency of the motor M and the generator G can be further improved.

Next, Fig. 11 shows a second embodiment wherein the relationship of the upper and lower flows in the first chamber C₃ on the inverter U side and the second chamber C₄ on the coolant container side are reversed. In this embodiment, the cooling water as the second coolant first flows on the second chamber C₄ side which faces the circulation passage L side for the first coolant of the drive unit case 10, i.e., the heat transfer wall 13, to cool the oil through the heat transfer wall 13. Then it flows in the first chamber C₃ facing the partition wall 11 side which is divided into upper and lower parts by the isolating means 12 to cool the power module of the inverter U.

When this type of embodiment is adopted as well, the cooling structure becomes such that the cooling water as the second coolant does not directly cool the motor M and the generator G, but cools the oil which circulates and cools them and the inverter U sequentially. Therefore, the heat from the motor M and the generator G is reduced by heat exchange with the cooling water through the oil, as opposed to direct heat transfer, such that an advantage is gained in that it is possible to prevent the temperature of the cooling water from rising above the heat resistant temperature of the inverter U.

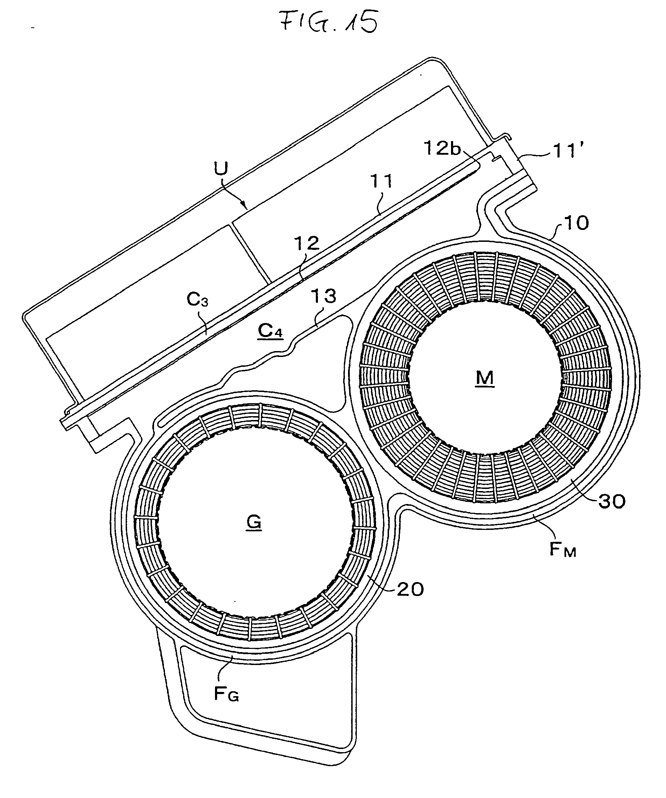

Next, Fig. 12 shows a explanatory example wherein the structure of the members forming the flow passage has been modified with respect to one adopting a flow passage structure for the second coolant similar to the first example or the first embodiment. In this example, a construction is adopted wherein an independent surrounding wall member 14 is interposed between the drive unit case 10 and the partition wall 11, and further, the independent isolating means 12 is interposed between the partition wall 11 and the surrounding wall member 14. The surrounding wall member 14 in this case may also be constructed with an aluminum material or the like of the same type as the material for the drive unit case 10 and the partition wall 11, or may be constructed with a material having a high heat insulating property of the same type as that of the isolating means 12. Further, in this example, as a point of modification of the structure on the drive unit case 10 side, the first and second coolant containers C₁, C₂ are respectively provided on the upper part of the motor M and the generator G.

When this type of construction is adopted, because the isolating means 12 which is an independent member is disposed between the drive unit case 10 and the partition wall 11, heat transfer resistance is generated between the isolating means 12 and the case 10 or the partition wall 11, so that an effect in which the heat which is directly transferred to the partition wall 11 from the drive unit case 10 through their contact portions can be reduced is gained.

Fig. 13 similarly shows an explanatory example wherein the structure of the members forming the flow passage has been modified with respect to one adopting a flow passage construction for second coolant similar to the first embodiment or the third embodiment. In this example, a construction is adopted wherein independent isolating means 12 is interposed between the partition wall 11 and the drive unit case 10. The isolating means 12 in this case has a construction such that it is integrally provided therearound with a surrounding wall part 12c which forms a connecting part between the drive unit case 10 and the partition wall 11.

When this type of construction is adopted as well, because the highly heat insulating isolating means 12 is disposed between the drive unit case 10 and the partition wall 11, heat transfer resistance is generated between the isolating means 12 and the case 10 or the partition wall 11, so that there an effect in which the heat which is directly transferred to the partition wall 11 from the drive unit case 10 through their contact parts can be reduced is gained.

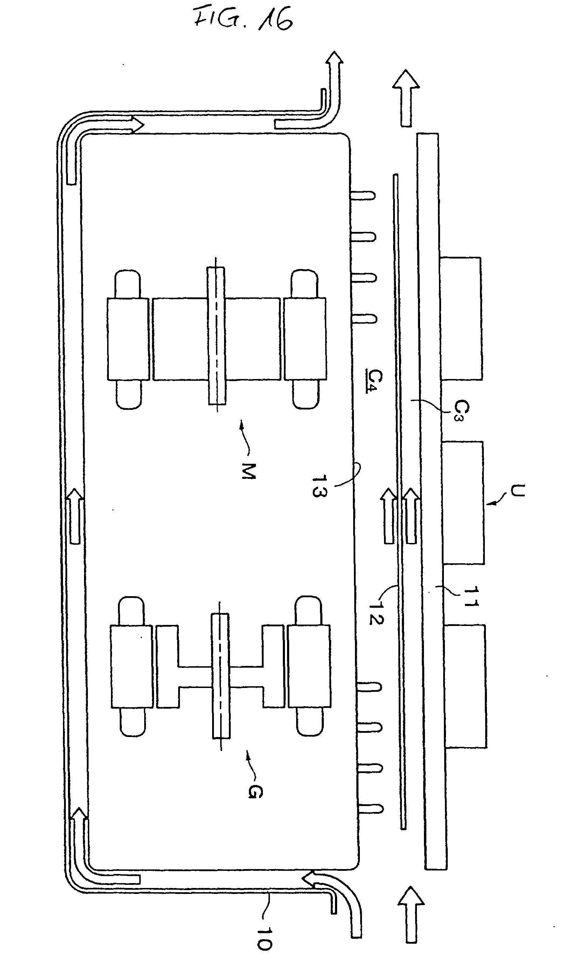

Although, in each embodiment and explanatory example described above, a cooling system is adopted wherein oil is used as a coolant for directly cooling the motor M and the generator G side, and secondary cooling of the oil is conducted with cooling water as a second coolant for cooling the inverter U, the present invention can also be embodied by a system for cooling the motor M, the generator G, and the inverter U with a single coolant. Fig. 14 and Fig. 15 show a third embodiment using this type of cooling system. As illustrated by the flow passage construction shown schematically in Fig. 14, in this embodiment, the downstream side of the flow passage passing through the first and second chambers C₃, C₄ is communicated with the flow passage in the drive unit case 10 for cooling the motor M and the generator G.

As illustrated by the cross-section in Fig. 15, the partition wall 11 in this embodiment is constructed in a lid shape, covering the drive unit case 10 and containing the first chamber C₃ and the second chamber C₄, i.e., in a shape having a surrounding wall 11' there around, and the isolating means 12 for separating the first chamber C₃ and the second chamber C₄ is disposed on the partition wall 11 side. The isolating means 12 in this case may be an independent member from the partition wall 11 as illustrated in the figure or may be integrated with the partition wall 11. According to this construction, the first chamber C₃ and the second chamber C₄ are separated by the isolating means 12 which is disposed nearer to the inverter U from the joint face of the partition wall 11 and the drive unit case 10. The downstream side of the flow passage passing through the first and the second chambers C₃, C₄ is communicated with the flow passage in the drive unit case 10 wall, where it first passes through a flow passage F_{G} formed along the outer periphery of the stator 20 of the generator G, then passes through a flow passage F_{M} formed along the outer periphery of the stator 30 of the motor M in the peripheral wall of the drive unit case 10 in the same manner, and is finally led to a position adjacent to the partition wall 11 of the drive unit case 10 where it ends at an outlet opening formed therein.

When this type of embodiment is adopted, the flow passage for the cooling water between the drive unit case 10 and the partition wall 11 can be constructed mainly on the partition wall 11 side, so that the structure of the drive unit case 10 can be simplified and the inverter U, the motor M, and the generator G can be cooled with a simple structure. Also, because the isolating means 12 is on the partition wall 11 side, heat resistance is generated when the heat from the motor M and the generator G is transferred to the isolating means 12, thereby making it possible to make it difficult for the heat from the motor M and the generator G to be transferred to the coolant which flows through the first chamber C₃ on the inverter U side. Moreover, because the isolating means 12 is on the inverter U side with respect to the joint face of the drive unit case 10 and the partition wall 11, the partition wall 11 extends toward the motor M and the generator G side farther than the isolating means 12, such that the heat capacity of the partition wall 11 can be increased by that amount.

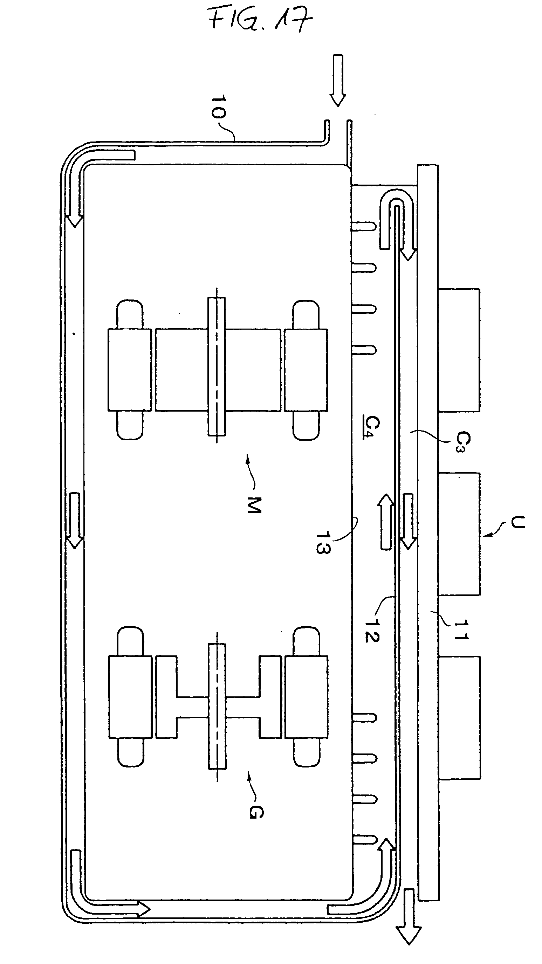

In this way, in the system that cools the motor M, the generator G, and the inverter U with a single coolant, as well, the relationship of the flow passages passing through the first and the second chambers C₃, C₄ can be modified as described above. Fig. 16 shows schematically a fourth embodiment wherein the first chamber C₃ facing the partition wall 11 side and the second chamber C₄ facing the drive unit case 10 side are formed in two layers and communicated in parallel together with the flow passage for coolant. With this embodiment, a flow passage is formed in the wall of the drive unit case similar to that of the aforementioned third embodiment, and this flow passage is communicated with the flow passage for coolant in a parallel relationship with the flow passage passing through the first and the second chambers C₃, C₄.

Lastly, Fig. 17 shows an fifth embodiment wherein the relationship of the upper and lower flows of the first chamber C₃ on the inverter U side and the second chamber C₄ on the coolant container side is reversed. In this embodiment as well, a flow passage is formed in the wall of the drive unit case similar to that of the aforementioned third embodiment, and this flow passage is communicated in serial with the upstream side of the flow passage passing through the first and the second chambers C₃, C₄. In this embodiment, the cooling water as a coolant first conducts heat exchange with the motor M and the generator G through the drive unit case 10 wall when it flows through the flow passage in the wall of the case 10 wall. It then conducts heat exchange with the motor M and the generator G through the heat transfer wall when it flows through the second chamber C₄, and then conducts heat exchange with the power module of the inverter U through the partition wall 11 when it flows through the first chamber C₃. In this case as well, the heat of the motor M and the generator G is reduced through the cooling water.

Above, the present invention has been described in detail based on embodiments. However, the present invention is not limited to these embodiments but can be implemented with various modifications of the specific construction within the scope of the matter described in the claims. For example, in each of the aforementioned embodiments, the second coolant is illustrated as cooling water, but naturally other appropriate coolants may be used.

In a drive unit which uses an electric motor as a driving source and which has an integrated inverter, the electric motor and the inverter are efficiently cooled. The drive unit comprises a drive unit case, an electric motor, and an inverter fixed to a drive unit case, and is provided with a coolant flow passage for them between the drive unit case and the inverter. The inverter is fixed to the drive unit case through a partition wall, and chambers, forming a two-layered coolant flow passage are formed between the partition wall and the drive unit case. As a result, the coolant which flows through the coolant flow passage acts as a two-step shielding means against the heat transmitted from the electric motor to the inverter.

## Claims

1. A drive unit comprising:
an electric motor (M);
a drive unit case (10) made from a heat conductive material for accommodating said electric motor (M);
an inverter (U) fixed to the outside of the drive unit case (10) for controlling said electric motor (M); and
a flow passage (F) for a coolant for cooling the electric motor (M), wherein
said inverter (U) is fixed to the drive unit case (10) through a partition wall (11);
a first chamber (C3) facing the partition wall (11) side and a second chamber (C4) facing the drive unit case (10) side are formed in two layers between the partition wall (11) and the drive unit case (10), said chambers (C3, C4) forming a part of the flow passage (F) for coolant, wherein
isolating means (12) for separating the first chamber (C3) and the second chamber (C4) is disposed on the partition wall (11) side,
**characterized in that**
said partition wall (11) is constructed in a lid shape which contains the first chamber (C3) and the second chamber (C4) and covers the drive unit case (10).

2. The drive unit according to claim 1, wherein the space between said first chamber (C3) and said second chamber (C4) is separated by independent isolating means (12) disposed on the partition wall side.

3. The drive unit according to claim 1 or 2, wherein said first chamber (C3) and second chamber (C4) are communicated together by a communication passage (12b), and are communicated in serial with each other, with the first chamber (C3) side disposed upstream.

4. The drive unit according to claim 1 or 2, wherein said first chamber (C3) and the second chamber (C4) are communicated in parallel together with the flow passage for coolant.

5. The drive unit according to claim 1 or 4, wherein said isolating means (12) comprises a material having low heat conductivity.

6. The drive unit according to claim 1, wherein said first chamber (C3) and the second chamber (C4) are separated by the isolating means (12) disposed nearer to the inverter (U) than the abutting face of the partition wall (11) and the drive unit case (10).

## Patentansprüche

1. Antriebseinheit mit:
einem Elektromotor (M);
einem aus einem wärmeleitfähigen Material gefertigten Antriebseinheitsgehäuse (10) zum Aufnehmen des Elektromotors (M);
einem an der Außenseite des Antriebseinheitsgehäuses (10) befestigten Umrichter (U) zum Steuern des Elektromotors (M); und
einem Strömungsdurchlass (F) für ein Kühlmittel zum Kühlen des Elektromotors (M), wobei
der Umrichter (U) über eine Trennwand (11) an dem Antriebseinheitsgehäuse (10) befestigt ist;
eine der Seite der Trennwand (11) zugewandte erste Kammer (C3) und eine der Seite des Antriebseinheitsgehäuses (10) zugewandte zweite Kammer (C4) in zwei Lagen zwischen der Trennwand (11) und dem Antriebseinheitsgehäuse (10) ausgebildet sind, wobei die Kammern (C3, C4) einen Teil des Strömungsdurchlasses (F) für das Kühlmittel bilden, wobei
an der Seite der Trennwand (11) eine Isoliereinrichtung (12) zum Trennen der ersten Kammer (C3) und der zweiten Kammer (C4) angeordnet ist,
**dadurch gekennzeichnet, dass**
die Trennwand (11) in einer Deckelform konstruiert ist, die die erste Kammer (C3) und die zweite Kammer (C4) enthält und die das Antriebseinheitsgehäuse (10) bedeckt.

2. Antriebseinheit gemäß Anspruch 1, wobei der Raum zwischen der ersten Kammer (C3) und der zweiten Kammer (C4) durch eine an der Seite der Trennwand angeordnete unabhängige Isoliereinrichtung (12) getrennt ist.

3. Antriebseinheit gemäß Anspruch 1 oder 2, wobei die erste Kammer (C3) und die zweite Kammer (C4) über einen Verbindungsdurchlass (12b) miteinander in Verbindung sind, und wobei sie in Reihe miteinander in Verbindung sind, wobei die Seite der ersten Kammer (C3) stromaufwärts angeordnet ist.

4. Antriebseinheit gemäß Anspruch 1 oder 2, wobei die erste Kammer (C3) und die zweite Kammer (C4) zusammen mit dem Strömungsdurchlass für das Kühlmittel parallel in Verbindung sind.

5. Antriebseinheit gemäß Anspruch 1 oder 4, wobei die Isoliereinrichtung (12) ein Material mit einer geringen Wärmeleitfähigkeit aufweist.

6. Antriebseinheit gemäß Anspruch 1, wobei die erste Kammer (C3) und die zweite Kammer (C4) durch die Isoliereinrichtung (12) getrennt sind, die näher an dem Umrichter (U) als an der Anlagefläche der Trennwand (11) und des Antriebseinheitsgehäuses (10) angeordnet ist.

## Revendications

1. Unité d'entraînement comprenant :
un moteur électrique (M) ;
un boîtier d'unité d'entraînement (10) fait en un matériau conducteur thermique pour accueillir ledit moteur électrique (M);
un inverseur (U) fixé à l'extérieur du boîtier d'unité d'entraînement (10) pour commander ledit moteur électrique (M) ; et
un passage de flux (F) pour un réfrigérant pour refroidir le moteur électrique (M), dans lequel
ledit inverseur (U) est fixé au boîtier d'unité d'entraînement (10) à travers une paroi de séparation (11);
une première chambre (C3) faisant face au côté de la paroi de séparation (11) et une deuxième chambre (C4) faisant face au côté du boîtier d'unité d'entraînement (10) sont formées en deux couches entre la paroi de séparation (11) et le boîtier d'unité de traitement (10), lesdites chambres (C3, C4) formant une partie du passage de flux (F) pour un réfrigérant, dans laquelle
un moyen d'isolement (12) pour séparer la première chambre (C3) et la deuxième chambre (C4) est disposé du côté de la paroi de séparation (11),
**caractérisée en ce que**
ladite paroi de séparation (11) est construite dans une forme de couvercle qui contient la première chambre (C3) et la deuxième chambre (C4) et couvre le boîtier d'unité d'entraînement (10).

2. Unité d'entraînement selon la revendication 1, dans laquelle l'espace entre ladite première chambre (C3) et ladite deuxième chambre (C4) est séparé par un moyen d'isolement indépendant (12) disposé du côté de la paroi de séparation.

3. Unité d'entraînement selon la revendication 1 ou 2, dans laquelle ladite première chambre (C3) et ladite deuxième chambre (C4) sont mises ensemble en communication par un passage de communication (12b), et sont mises en communication en série l'une avec l'autre, avec le côté de la première chambre (C3) disposé en amont.

4. Unité d'entraînement selon la revendication 1 ou 2, dans laquelle ladite première chambre (C3) et ladite deuxième chambre (C4) sont mises en communication en parallèle conjointement avec le passage de flux pour un réfrigérant.

5. Unité d'entraînement selon la revendication 1 ou 4, dans laquelle ledit moyen d'isolement (12) comprend un matériau ayant une basse conductivité thermique.

6. Unité d'entraînement selon la revendication 1, dans laquelle ladite première chambre (C3) et la deuxième chambre (C4) sont séparées par le moyen d'isolement (12) disposé plus proche de l'inverseur (U) que la face de butée de la paroi de séparation (11) et du boîtier d'unité d'entraînement (10).
